**Europäisches Patentamt**

**European Patent Office**

**Office européen des brevets**

(19)

(11) Veröffentlichungsnummer: **0 104 355**
**B1**

# (12) EUROPÄISCHE PATENTSCHRIFT

(45) Veröffentlichungstag der Patentschrift:
**24.09.86**

(21) Anmeldenummer: **83107396.0**

(22) Anmeldetag: **27.07.83**

(51) Int. Cl.⁴: **C 05 F 11/00**

(54) **Verfahren zur Herstellung eines vollwertigen Humusträgers und Düngers auf Rindenbasis.**

(30) Priorität: **24.09.82 DE 3235452**

(43) Veröffentlichungstag der Anmeldung:
**04.04.84 Patentblatt 84/14**

(45) Bekanntmachung des Hinweises auf die Patenterteilung:
**24.09.86 Patentblatt 86/39**

(84) Benannte Vertragsstaaten:
**AT CH DE FR IT LI**

(56) Entgegenhaltungen:
**EP-B-0 004 632**
**DE-A-3 040 040**
**DE-B-3 000 098**
**FR-A-668 753**
**FR-A-2 123 042**
**FR-A-2 236 814**
**US-A-3 645 714**
**US-A-4 135 907**

(73) Patentinhaber: **CHEMIE LINZ AKTIENGESELLSCHAFT, St. Peter- Strasse 25, A-4020 Linz (AT)**
(84) Benannte Vertragsstaaten: **CH FR IT LI AT**

(73) Patentinhaber: **Lentia Gesellschaft mit beschränkter Haftung, Arabellastrasse 4 Postfach 81 05 08, D-8000 München 81 (DE)**
(84) Benannte Vertragsstaaten: **DE**

(72) Erfinder: **Wihrheim, Sven, Dr., Mannheimerstrasse 11, A-4040 Linz (AT)**
Erfinder: **Zohner, Andreas, Dr., Herderstrasse 29, A-4020 Linz (AT)**

EP 0 104 355 B1

## Beschreibung

Die vorliegende Erfindung betrifft die Herstellung eines vollwertigen Humusträgers und Düngers auf Basis der bei der Verarbeitung von Stammholz anfallenden Baumrinde, der auf einen voll ausgewogenen Nährstoffgehalt eingestellt werden kann und sich durch besondere Pflanzenverträglichkeit auszeichnet.

Es ist bekannt, daß Baumrinde, wie sie durch Entrindung von Stammholz in holzverarbeitenden Betrieben anfällt, einem Humifizierungsprozeß unterworfen werden kann. Da dieser Prozeß, wenn er natürlich abläuft, sehr lange, nämlich mehrere Jahre, dauert, wurde gemäß AT-B 367 010 vorgeschlagen, die Rinde zur Beschleunigung der Humifizierung einer Behandlung mit überhitztem Dampf von über 100°C, vorzugsweise über 120°C, zu unterwerfen, wobei innerhalb des Produktes die Temperatur über 90°C ansteigen muß. Bei dieser Behandlung werden die Bindungskräfte innerhalb der Rinde · stark angegriffen und damit der Humifizierungsprozeß der Rinde beschleunigt. Darüberhinaus werden gleichzeitig wachstumshemmende Rindeninhaltsstoffe und pathogene Keime zerstört.

Ein solcherart erzeugtes Produkt kann daher als Basis für einen Dünger eingesetzt werden, wobei zur Einstellung des dazu erforderlichen Verhältnisses von Kohlenstoffgehalt zu Stickstoffgehalt von 15: 1 ein schwer oder nicht wasserlöslicher Stickstoffträger vor oder während der Dampfbehandlung zugesetzt wird.

Gemäß AT-B 367 010 wird der so erhaltene Humusdünger zur direkten Verwendung empfohlen. Bei Ausbringen des Düngers auf den Boden stellen sich dann Wechselwirkungen zwischen den Bakterien der Rinde, dem unlöslichen Stickstoffträger und möglicherweise auch den Boden-Mikrokulturen ein, die zu einer Erwärmung des Produktes und zu einer schnellen Verrottung der Rinde führen, ein Vorgang, für den die schlechte oder gar fehlende Wasserlöslichkeit des Stickstoffträgers als begünstigend bezeichnet wurde.

Bei der praktischen Anwendung des Humusbildners gemäß AT-B 367 010 zeigte sich jedoch, daß diese Wechselwirkung im Boden mit einem starken Stickstoffverbrauch verbunden ist, wobei dieser dem Boden seinen sofort zur Verfügung stehenden Stickstoffgehalt entzieht. Da der in diesem Produkt enthaltene schwer oder unlösliche Stickstoff erst langsam verfügbar wird, kommt es dabei zu einer drastischen Verarmung des Bodens an löslichem Stickstoff, der zu einer schweren Schädigung der Kulturpflanzen führt. Die Verwertung dieser Produkte war daher als Dünger nur in geringen Gaben möglich, in höheren Gaben oder gar als Kulturmedium hingegen völlig ausgeschlossen.

Andererseits wurde bereits empfohlen, Rinde durch Anwendung einer Fermentierung allein in · ein Humusprodukt umzuwandeln. So wird gemäß DE-B-30 00 098 empfohlen, Rinde mit Harnstoff und Humusbakterien zu vermengen und einer Fermentierung bei einer sich von selbst einstellenden Temperatur von etwa 70°C zu unterziehen, deren Dauer nicht angegeben ist. Gleichzeitig wird eine Dampfbehandlung als Mittel zum Umwandeln von Rinde in Humus als zu aufwendig abgelehnt. Zur Fermentierung wurden pro Kubikmeter Rinde nur etwa 0,5 bis 1 kg Harnstoff eingesetzt, was einem Verhältnis von Kohlenstoff zu Stickstoff von bestenfalls 64:1 entspricht. Bei einem derartig hohen Kohlenstoff-.Stickstoff-Verhältnis kann von einer Stickstoffversorgung der Pflanze durch den Humusträger keine Rede sein. Ein höherer N-Gehalt des Produktes kann aber nur durch Zugabe von Düngesalzen erfolgen. Der daraus resultierende hohe Salzgehalt ist aber für einen Dünger tragbar, für ein Pflanzsubstrat jedoch ungeeignet.

In der FR-A-2 123 042 wird ebenfalls ein Kompostierverfahren durch Fermentierung allein beschrieben, wobei aus zerkleinerter Rinde in einer speziell konstruierten Apparatur ein Kompost mit relativ geringem Stickstoffgehalt bei einem Verhältnis von Kohlenstoff: Stickstoff von 30: 1· und höher erhalten wird.

Gemäß DE-A-30 40 040 wird vorgeschlagen, Rinde in Gegenwart von Ammonhydrogencarbonat als Stickstoffträger zu fermentieren. Die vorgeschriebene Stickstoffmenge beträgt dabei pro Kubikmeter Rinde 1 bis 2 kg Reinstickstoff, was etwa 2 - 4 kg Harnstoff pro Kubikmeter Rinde entspricht. Das Verhältnis von Kohlenstoff zu Stickstoff beträgt dabei bestenfalls 34:1. Trotz einer Dauer der Fermentierung bis zu etwa 20 Wochen werden nur ungefähr zwei Drittel des zugesetzten Stickstoffs organisch gebunden. Es bleiben also noch hohe wasserlösliche Stickstoffkonzentrationen im Humusträger zurück, die einen Einsatz als Pflanzensubstrat ohne Verdünnung unmöglich machen.

Schließlich ist in der US-A-4,135.907 ein Verfahren zum Überführen von Rinde in ein Kompostprodukt beschrieben, gemäß dem die gemahlene Rinde in einer Mischmühle (pug mill) mit Abwasser von Papierfabriken und Stickstoffverbindungen wie Ammonsulfat, Ammonnitrat oder Harnstoff gemischt wird, worauf das resultierende Produkt mit Kalk neutralisiert und 5 - 7 Tage in einem Mischgefäß bei 60 - 67°C mit Luft behandelt wird. Zum weiteren Aufschluß der Cellulose kann das Reaktionsprodukt anschließend unter Atmosphärenbedingungen 15 bis 30 Tage fermentiert werden, wobei sich ein Kohlenstoff-Stickstoffverhältnis von etwa 15 bis 20: 1 einstellen soll. Die mehrere Tage dauernde Behandlung in einer aufwendigen Apparatur bedeutet hierbei eine große wirtschaftliche Belastung. Abgesehen davon ist das nach der Fermentation anfallende Produkt in seinen Eigenschaften nicht näher definiert, sodaß auch nicht feststellbar ist, ob tatsächlich ein stickstoffstabiles Produkt mit niederem Salzgehalt, wie es für ein Pflanzsubstrat benötigt wird, erhältlich ist.

Der vorliegenden Erfindung liegt die Aufgabe zugrunde, den aus Rinde erzeugten Humus auf wirtschaftliche Weise nicht nur als Dünger sondern auch als vollwertiges Pflanzsubstrat voll einsatzfähig zu machen.

Die Lösung dieser Aufgabe beruht auf der überraschenden Feststellung, daß der durch die nur relativ kurz andauernde Dampfbehandlung von Rinde bei mindestens 90°C erhaltene Humusträger zu einer raschen und gezielt verlaufenden Fermentierung befähigt ist und dabei in der Lage ist, große Mengen an Stickstoff zu binden. Dadurch wird es möglich, optimale Kohlenstoff-Stickstoff-Verhältnisse von höchstens 25:1 im Humusträger zu erhalten, die 90% und mehr des Stickstoffs organisch gebunden enthalten und deren Gehalt an wasserlöslichen Stickstoffsalzen daher so gering ist, daß das Produkt in unverdünntem Zustand eine ausgezeichnete Pflanzenverträglichkeit aufweist. Voraussetzung ist hierbei, daß für den Ablauf des Fermentierungsprozesses bis zu dessen Stillstand die nötige Menge an wasserlöslichem Stickstoff zugegen ist und daß bei der Fermentierung bestimmte Bedingungen hinsichtlich Temperatur und Wassergehalt eingehalten werden.

Gegenstand der vorliegenden Erfindung ist demnach ein Verfahren zur Herstellung eines vollwertigen Humusträgers und Düngers auf Basis der bei der Verarbeitung von Stammholz anfallenden Baumrinde durch Zerkleinern, Zugabe von Stickstoffträgern sowie Behandlung mit überhitztem Dampf unter Einstellung einer Reaktionstemperatur von mindestens 90°C in der Rinde, das dadurch gekennzeichnet ist, daß der Rinde ein wasserlöslicher Stickstoffträger in einer Menge zugesetzt wird, daß in der Mischung ein Verhältnis von Kohlenstoff zu Stickstoff von höchstens 25:1 eingestellt wird, wobei zuerst ein Teil der insgesamt zuzusetzenden Menge an dem wasserlöslichen Stickstoffträger zugegeben und die Mischung gelagert wird, bis die Rinde eine mürbe Beschaffenheit aufweist, worauf das Produkt zerkleinert und mit dem verbleibenden Rest des wasserlöslichen Stickstoffträgers versetzt und das Reaktionsprodukt nach der Bedampfung bei einem Wassergehalt desselben von 60 bis 70 Gew.%, der nötigenfalls eingestellt wird, einer Fermentierung bei einer Temperatur von 50 bis 70°C und einem pH-Wert des Produktes im Bereich von 6 bis 7,5 unterworfen wird, bis die Fermentierung trotz Vorhandensein eines Restgehaltes an wasserlöslichem Stickstoff zum Stillstand kommt, worauf das Reaktionsprodukt gegebenenfalls mit weiteren Nährstoffkörpern, Bodenverbesserungsmitteln und/oder Spurenelementen versetzt wird.

Ein wesentlicher Vorteil des erfindungsgemäß hergestellten Humusträgers ist, daß er völlig ausreagiert ist und daher im Boden keinen nährstoffverbrauchenden Nachreaktionen unterliegt. Daher ist es möglich, durch Zusatz von Nährstoffträgern und ev. auch Spurenelementen einen ganz bestimmten Nährstoffgehalt einzustellen, der im Gegensatz zu den bisher bekannten Düngern auf Rindenhumusbasis den Pflanzen auch tatsächlich zur Verfügung steht.

Diese Einstellung des Nährstoffverhältnisses kann dabei durch Zugabe von Nährstoffträgern zum fertigen Humus erfolgen. Da dazu aber ein eigener Mischvorgang erforderlich ist, kann es günstiger sein, die bei der Dampfbehandlung nötige Durchmischung zusätzlich zur Erzielung einer gleichmäßigen Verteilung von Nährstoffen und Spurenelementen zu benützen, sodaß ein Zusatz solcher Nährstoffe und/oder Spurenelemente vor der Dampfbehandlung bevorzugt ist. Besonders günstig ist es, wenn der Rinde vor der Dampfbehandlung wasserlösliches Phosphat zugesetzt wird, da während der Fermentierung ein gewisser Phosphatspiegel fördernd wirkt. Es hat sich ferner gezeigt, daß in der Rinde meist ein hoher Mangangehalt feststellbar ist. Da für einen Dünger bzw. ein Pflanzsubstrat ein bestimmtes Verhältnis Eisen zu Mangan erwünscht ist, ist es besonders bevorzugt, zusätzlich zu ev. anderen benötigten Spurenelementen, wie z.B. Molybdänsalzen, vor allem jene Menge an Eisensalzen vor der Bedampfung zuzusetzen, um das für die spätere Verwendung optimale Fe/Mn-Verhältnis einzustellen. Die Produkte können ferner auch mit anderen Bodenverbesserungsmitteln, wie z.B. Torf, Schaumstoffschnitzel etc., gemischt werden.

Voraussetzung für die Einstellbarkeit des optimalen bzw. für bestimmte Zwecke erwünschten Nährstoffverhältnisses ist allerdings, daß die erfindungsgemäße Nachfermentierung auch bis zum tatsächlichen Endpunkt fortgeführt wird, sodaß innerhalb des Humusträgers nach einer Einstellung des Nährstoffgehalts nach der Fermentierung keine Reaktionen mehr stattfinden können, die Nährstoffe verbrauchen. Die Erreichung des Endpunktes kann dabei auf mehrere Arten bestimmt werden. So zeigt sie sich z.B. dadurch an, daß sich der wasserlösliche Stickstoffgehalt des Produktes, der während des Fermentierungsprozesses stetig abnimmt, auf einen konstanten Wert einpendelt, was durch mehrere, zeitlich hintereinander durchgeführte Stickstoffbestimmungen feststellbar ist.

Voraussetzung ist jedoch, daß vor der Dampfbehandlung soviel an wasserlöslichen Stickstoffverbindungen zugesetzt wird, daß der lösliche Stickstoff für den Fermentierungsprozeß ausreicht bzw. mindestens ein geringer Überschuß verbleibt. Bei Einhaltung des erfindungsgemäß einzustellenden höchsten Verhältnisses von Kohlenstoff zu Stickstoff von 25:1 reicht die Menge an wasserlöslichem Stickstoff bis zur Erreichung des Stillstandes des Fermentierungsprozesses meist aus. Vorzugsweise wird das Verhältnis von Kohlenstoff zu Stickstoff sogar auf 20 bis 15:1 eingestellt, wodurch besonders wertvolle Pflanzsubstrate erhalten werden. Es empfiehlt sich jedoch trotzdem, sich durch Stickstoffbestimmungen gegen Ende des Fermentierungsprozesses zu überzeugen, ob noch wasserlöslicher Stickstoff vorhanden ist. Ist dies nicht der Fall, muß noch wasserlöslicher Stickstoff hinzugefügt werden, um den Fermentierungsprozeß tatsächlich zu Ende bringen zu können.

Da sich während des Fermentiervorganges die Temperatur erhöht, ist es auch ein Zeichen für das Ende der Reaktion, daß die Temperatur unter 50°C absinkt. Dabei ist allerdings zu beachten, daß die Reaktion durch zu niedrigen Sauerstoffgehalt im Inneren des Produktes auch vorzeitig zum Stillstand kommen kann. Wird ein Absinken der Temperatur unter 50°C registriert, ist es daher notwendig, den in Mieten liegenden Rindenhumus "umzusetzen", das heißt durchzumischen, um innenliegende Teile mit der Luft in Berührung zu bringen. Erst wenn nach einer solchen Umsetzung trotz Vorhandenseins von wasserlöslichem Stickstoff keine Temperaturerhöhung zu verzeichnen ist, ist der Endpunkt der Fermentierung erreicht und kann gewünschtenfalls die endgültige Nährstoffeinstellung erfolgen.

Wie oft eine solche Umsetzung, die einen gewissen Arbeitsaufwand nötig macht, erfolgen muß, hängt von den Bedingungen der Fermentierung, vor allem von der Jahreszeit und der Mietenhöhe, ab. Je höher diese gewählt wird, desto mehr muß damit gerechnet werden, daß mehrmals umgesetzt werden muß. Andererseits ist eine zu geringe Mietenhöhe ungünstig, da dann die für die Fermentierung nötige Temperatur schwer bis zum Endpunkt gehalten werden kann. In der Regel empfiehlt sich die Einhaltung einer Mietenhöhe von 2 bis 4 m, wobei eine solche von etwa 2,5 m besonders bevorzugt ist. In diesem Fall wird meist mit einer 2 bis 3maligen Umsetzung des Produktes eine völlige Ausreaktion erreicht.

Für den optimalen Ablauf des Fermentierungsprozesses ist es notwendig, die Temperatur im Bereich von 50 bis 70°C zu halten. Dazu ist die Einstellung des Wassergehaltes des Produktes auf 60 bis 70 Gew.% erforderlich. Sollte die Reaktion zu stürmisch verlaufen und daher die Temperatur über 70°C ansteigen, empfiehlt es sich, die Temperatureinstellung durch Zugabe von Wasser und/oder Einblasen von Luft vorzunehmen.

Während der Dampfbehandlung und während des Fermentationsprozesses werden saure Stoffe, wie z.B. Gerbsäuren, Huminsäuren u.ä., gebildet bzw. freigesetzt, was zu einer Abnahme des pH-Wertes im Produkt führt. Um eine derartige Abnahme zu verhindern und zu gewährleisten, daß der erfindungsgemäße pH-Bereich während der Fermentation eingehalten wird, müssen der Rinde, zweckmäßig vor der Bedampfung, basische Substanzen, wie beispielsweise Erdalkalicarbonate, zitratlösliche Phosphate, wie Thomasmehl, u.a. zugesetzt werden. Die Menge richtet sich dabei nach der Art der Rinde, beispielsweise nach deren Gerbstoffgehalt. Als sehr günstig hat sich ein Zusatz von Calciumcarbonat erwiesen, besonders bevorzugt ist die Verwendung eines Gemisches von Calcium- und Magnesiumcarbonat, da dadurch gleichzeitig ein bestimmter Magnesiumspiegel im Produkt einstellbar ist.

Als lösliche Stickstoffkomponente, die der Rinde zur Erzielung der erfindungsgemäß raschen und gezielten Fermentation zuzusetzen ist, kann jede wasserlösliche Stickstoffverbindung eingesetzt werden. Beispielsweise können Ammonsulfat, Ammonnitrat, ev. auch in Form von Kalkammonsalpeter, der dann auch gleichzeitig die Pufferwirkung übernimmt, Ammonphosphate, Harnstoff, niederkondensierte Harnstoff-Formaldehydadukte etc. genannt werden. Es sind aber auch biologische Stickstoffträger mit Anteilen an wasserlöslichen Stickstoffträgern, wie beispielsweise Klärschlamm, Gülle, Jauche, Stallmist usw., verwendbar. Bevorzugt wird hierbei als Stickstoffquelle ein Ammoniumstickstoff, noch besser ein Amidstickstoff, vor allem Harnstoff gewählt. In diesem Fall ist der Endpunkt der Reaktion auch dadurch zu erkennen, daß im Produkt nennenswerte Anteile an Nitratstickstoff festzustellen sind. Das kann z.B. mittels Teststreifen auf einfache Weise festgestellt werden.

Die Zugabe des wasserlöslichen Stickstoffträgers erfolgt in zwei Teilen, wobei der erste, meist kleinere Teil des insgesamt zuzusetzenden Stickstoffs der Rinde, die lediglich vorzerkleinert sein kann, zugegeben wird, worauf die Mischung eine Zeit lang gelagert wird, bis die Rinde eine mürbe Beschaffenheit aufweist. Erst dann wird zerkleinert und der Rest des Stickstoffträgers, meist die überwiegende Menge des Stickstoffträgers zugesetzt, der nötig ist, um das Kohlenstoff-Stickstoffverhältnis von höchstens 25:1 einzustellen. Durch diese Vorgangsweise wird eine Art Voraufschluß erzielt und die Zerkleinerung erleichtert, wodurch Energie gespart werden kann.

Die zuzusetzende Menge an Harnstoff beträgt vorzugsweise 5 bis 8 kg pro Kubikmeter Rinde.

Nach beendeter Fermentierung und gegebenenfalls erforderlicher bzw. erwünschter Ergänzung oder Feineinstellung des Nährstoffgehaltes bzw. des Gehaltes an Spurenelementen ist das Produkt gebrauchsfertig und stellt einen hochwertigen Humusträger dar, der sich besonders durch ein hohes Stickstoffspeichervermögen auszeichnet. Mit entsprechend niedrigerem Nährstoffspiegel ist es als hochwertiges Pflanzensubstrat verwendbar, wozu es gegebenenfalls mit Torf gemischt werden kann.

Das erfindungsgemäße Verfahren ist natürlich nicht nur auf die Bedampfungsprodukte ausgehend von Rinde allein anwendbar. Es können ebenso auch Produkte der erfindungsgemäßen Nachfermentierung unterworfen werden, die durch Bedampfung von rindenähnlichen Substanzen ev. im Gemisch mit anderen verholzten Pflanzenteilen sowie anderen pflanzlichen Rückständen, wie beispielsweise Laub, Preßrückstände aus Wein- und Obstverwertung usw., erhalten werden.

Das erfindungsgemäße Verfahren soll anhand der vorliegenden Beispiele näher erläutert werden.

**Beispiel 1:**

Gemischte Rinde von Tanne und Fichte wird nach Anlieferung pro Kubikmeter mit 1,5 kg Harnstoff versetzt und gelagert. Das dadurch mürbe gemachte Produkt wird dann zerkleinert. Nach der Zerkleinerung werden pro Kubikmeter Rinde 1 kg Calcium-Magnesiumcarbonatgemisch mit einem Magnesiumcarbonatgehalt von 15 Gew.%, 5,7 kg Harnstoff, 1 kg Superphosphat als lösliche P-Komponente, 0,6 kg Eisensulfatheptahydrat und 2,5 g Natriummolybdat zugesetzt. Das dabei eingestellte Kohlenstoff-Stickstoffverhältnis beträgt 19:1, wobei dieses unter Zugrundelegung eines mittleren C/N-Verhältnisses der Rinde von 82:1 und einer Dichte der Rinde von 0,15 kg/l. berechnet wurde. Diese Mischung wird in einem geschlossenen Behälter unter ständigem Umwälzen mit überhitztem Wasserdampf einer Temperatur von 120° C behandelt, wobei sich im Produkt eine Temperatur von 90° C einstellt. Nach halbstündiger Reaktionszeit bei 90° C wird das Reaktionsprodukt ausgetragen. Der Wassergehalt des Produktes beträgt 65 Gew.%. Daraufhin wird es im Freien zu einer Miete von 2,5 m Höhe aufgeschüttet, wo der Fermentierungsprozeß sofort in Gang kommt, was daran zu erkennen ist, daß innerhalb weniger Stunden eine Temperatur von 45° C und bei einer Außentemperatur von 15° C innerhalb von drei Tagen eine Temperatur von 65° C erreicht wird. Die Fermentierzeit beträgt 3 Monate, wobei innerhalb dieser Zeit die Rinde 3mal umgesetzt wird. Der Endpunkt ist daran zu erkennen, daß von dem vorhandenen Gehalt an Ammonium- und Nitratstickstoff von 502 mg/l der $NH_4$-N 150 mg/l, der $NO_3$-N jedoch 352 mg/l ausmacht. Das fertige Produkt hatte einen pH von 7, einen Gesamt-N-Gehalt von 4939 mg/l, entsprechend einem C/N-Verhältnis von 19:1, einen $P_2O_5$-Gehalt von 647 mg/l und einen $K_2O$-Gehalt von 647 mg/l. Es ist in dieser Form als Pflanzsubstrat verwendbar.

Wird diese Rinde anschließend in einer Mischanlage mit 35 kg eines Volldüngers mit einem N : $P_2O_5$ : $K_2O$ und Spurenelementverhältnis von 14: 6: 18+5 vermischt, so erhält man einen gebrauchsfertigen Dünger mit folgendem Nährstoffgehalt:

PH 7,0
$NH_4$-N, löslich 2510 mg/l
$NO_3$-N, löslich 2790 mg/l
$P_2O_5$, löslich 2169 mg/l

$K_2O$, löslich 5887 mg/l
Gesamt-N 9401 mg/l

**Beispiel 2:**

Nadelholzrinde (bestehend aus ca. 90% Fichten- und 10% Föhrenrinde) wird mit 1 kg Harnstoff pro Kubikmeter versetzt und gelagert. Der Wassergehalt beträgt ca. 75 Gew.%. Verholzte, mittels einer Hackmaschine vorzerkleinerte Pflanzenteile, wie sie in einer Baumschule in größeren Mengen anfallen, werden in einem Volumsverhältnis von etwa 30% der Rinde zugemischt und gemeinsam fein zerkleinert. Das dabei eingestellte C/N-Verhältnis beträgt 23:1. Durch die Zumischung der relativ trockenen Pflanzenabfälle verringert sich der Wassergehalt auf ungefähr 65 Gew.%. Zur Bedampfung, die, wie in Beispiel 1 beschrieben, durchgeführt wird, werden pro Kubikmeter des Gemisches von Rinde und Holz 1 kg eines Ca/Mg-Carbonat-Gemisches (15 Gew.% Magnesiumcarbonatanteil), 5 kg Harnstoff, 1 kg Superphosphat, 0,6 kg Eisensulfat-heptahydrat sowie 2,5 g Na-Molybdat zugesetzt. Nach der Bedampfung beträgt der Wassergehalt 68 Gew.%.

In Mieten von 2,5 m Höhe fermentiert, erreicht die Mietentemperatur in 1 m Tiefe gemessen nach 4 Tagen rund 65° C. Bei Abfallen der Temperatur unter 50° C werden die Mieten umgesetzt, was innerhalb von 3 Monaten insgesamt 3mal der Fall war. Nach 13 Wochen Fermentierdauer beträgt die Mietentemperatur 30° C. Eine Nährstoffanalyse zu diesem Zeitpunkt ergibt:

$H_2O$-Gehalt 63 Gew.%
pH 6,5
Gesamt-N 4050 mg/l
$NH_4$-N, löslich 216 mg/l
$NO_3$-N, löslich 433 mg/l
$P_2O_5$, löslich 238 mg/l
$K_2O$, löslich 541 mg/l

Zur Finalisierung als Pflanzsubstrat wird das ausfermentierte Produkt mit Schwarztorf, der mit 1,5 kg eines Gemisches von Calcium- und Magnesiumcarbonat auf pH 6 gebracht wurde, im Verhältnis 1: 1 vermischt und abgesackt.

**Beispiel 3:**

Nadelholzrinde, bestehend aus einem Gemisch von etwa 80% Fichten- und 20% Föhrenrinde, wird mit 1 kg Harnstoff/$m^3$ versetzt und gelagert. Der Wassergehalt der relativ trockenen Rinde beträgt 48 Gew.%. Nach der Zerkleinerung werden pro Kubikmeter Rinde 0,5 kg eines Gemisches von Calcium und Magnesiumcarbonat mit einem Gehalt an Mg-Carbonat von 40 Gew.%, 0,5 kg Superphosphat, 0,3 kg Eisensulfat-heptahydrat, 4,5 kg Harnstoff sowie 100 l

Klärschlamm (aus Kommunalkläranlage) zugesetzt. Der Klärschlamm enthält 69,7 g/l Trockensubstanz und besitzt einen Gesamt-N-Gehalt von 5,4 g/l, einen Gehalt an löslichem $NH_4$-N von 0,7 g/l, einen Gesamt-$P_2O_5$-Gehalt von 0,7 g/l und einen $K_2O$-Gehalt von 0,1 g/l. Nitratstickstoff war nicht nachweisbar. Die Mischung, die ein C/N-Verhältnis von 21:1 aufweist, wird, wie in Beispiel 1 beschrieben, bedampft und anschließend auf Mieten von 2,5 m Höhe gelegt. Der Wassergehalt beträgt zu Beginn der Fermentierung 69 Gew.%. Innerhalb von 3 Monaten wird 3mal umgesetzt. Zeitpunkt für das Umsetzen war das Absinken der Mietentemperatur in 1 m Tiefe unter 50°C. Eine Analyse des fertig fermentierten Produktes ergibt:

$H_2O$-Gehalt 66,9 Gew.%
pH 6,6
Gesamt-N 4540 mg/l
$(NH_4+NO_3)$-N, löslich 128 mg/l
$P_2O_5$, löslich 75 mg/l
$K_2O$, löslich 250 mg/l

Zur Abrundung des Nährstoffgehaltes des Substrates werden 0,6 kg eines vollwasserlöslichen Volldüngers (N 15 Gew.%, $P_2O_5$ 5 Gew.%, $K_2O$ 20 Gew.% + Spurenelemente) pro Kubikmeter zugemischt. Eine Analyse des Pflanzsubstrates ergibt:

$H_2O$-Gehalt 65,5 Gew.%
pH 6,7
Gesamt-N 4630 mg/l
$(NH_4+NO_3)$-N, löslich 218 mg/l
$P_2O_5$, löslich 105 mg/l
$K_2O$, löslich 370 mg/l.

**Patentansprüche:**

1. Verfahren zur Herstellung eines vollwertigen Humusträgers und Düngers auf Basis der bei der Verarbeitung von Stammholz anfallenden Baumrinde durch Zerkleinern, Zugabe von Stickstoffträgern sowie Behandlung mit überhitztem Dampf unter Einstellung einer Reaktionstemperatur von mindestens 90°C in der Rinde, dadurch gekennzeichnet, daß der Rinde ein wasserlöslicher Stickstoffträger in einer Menge zugesetzt wird, daß in der Mischung ein Verhältnis von Kohlenstoff zu Stickstoff von höchstens 25:1 eingestellt wird, wobei zuerst ein Teil der insgesamt zuzusetzenden Menge an dem wasserlöslichen Stickstoffträger zugegeben und die Mischung gelagert wird, bis die Rinde eine mürbe Beschaffenheit aufweist, worauf das Produkt zerkleinert und mit dem verbleibenden Rest des wasserlöslichen Stickstoffträgers versetzt und das Reaktionsprodukt nach der Bedampfung bei einem Wassergehalt desselben von 60 bis 70 Gew.%, der nötigenfalls eingestellt wird, einer Fermentierung bei einer Temperatur von 50 bis 70°C und einem pH-Wert des Produktes im Bereich von 6 bis 7,5 unterworfen wird, bis die Fermentierung trotz Vorhandensein eines Restgehaltes an wasserlöslichem Stickstoff zum Stillstand kommt, worauf das Reaktionsprodukt gegebenenfalls mit weiteren Nährstoffkörpern, Bodenverbesserungsmitteln und/oder Spurenelementen versetzt wird.

2. Verfahren nach Anspruch 1, dadurch gekennzeichnet, daß vor der Bedampfung außerdem noch eine wasserlösliche Phosphatkomponente zugesetzt wird.

3. Verfahren nach den Ansprüchen 1 und 2, dadurch gekennzeichnet, daß vor der Bedampfung Spurenelemente zugesetzt werden.

4. Verfahren nach Anspruch 3, dadurch gekennzeichnet, daß durch Zusatz von Eisensalzen das optimale Eisen-Manganverhältnis eingestellt wird.

5. Verfahren nach den Ansprüchen 1 bis 4, dadurch gekennzeichnet, daß das Verhältnis Kohlenstoff zu Stickstoff in der Mischung vor der Bedampfung auf 15 bis 20:1 eingestellt wird.

6. Verfahren nach den Ansprüchen 1 bis 5, dadurch gekennzeichnet, daß der pH-Wert während der Fermentierung durch Zugabe von Calciumcarbonat oder einem Gemisch von Calcium- und Magnesiumcarbonat vor der Bedampfung in einem Bereich von 6 bis 7,5 gehalten wird.

7. Verfahren nach den Ansprüchen 1 bis 6, dadurch gekennzeichnet, daß die Temperatureinstellung durch Zugabe von Wasser und/oder Einblasen von Luft vorgenommen wird.

8. Verfahren nach den Ansprüchen 1 bis 7, dadurch gekennzeichnet, daß als wasserlöslicher Stickstoffträger Harnstoff verwendet wird, der in einer Menge von 5 bis 8 kg pro Kubikmeter Rinde zugesetzt wird.

**Claims**

1. Process for the production of a high-value humus carrier and fertiliser, based on the bark obtained in the processing of timber, by comminution, addition of nitrogen carriers and treatment with superheated steam, setting a reaction temperature of at least 90°C in the bark, characterised in that a water-soluble nitrogen carrier is added to the bark in such a quantity that a carbon/nitrogen ratio of at most 25:1 is set in the mixture, initially a part of the total quantity to be added of the water-soluble nitrogen carrier being added and the mixture being stored until the bark has become friable, whereupon the product is comminuted and the remainder of the water-soluble nitrogen carrier is added and, after the steaming, the reaction product at a water content thereof of 60 - 70% by weight, which is adjusted if necessary, is subjected to a fermentation at a temperature of 50 - 70°C and at a pH value of the product in the range from 6 to 7.5, until the fermentation stops in spite of the presence of a residual water-soluble nitrogen content, whereupon further nutrients, soil improvers and/or trace elements are, if desired, added to the reaction product.

2. Process according to Claim 1, characterised in that additionally, before the steaming, a water-soluble phosphate component is also added.

3. Process according to Claims 1 and 2, characterised in that trace elements are added before the steaming.

4. Process according to Claim 3, characterised in that the optimum iron/manganese ratio is set by an addition of iron salts.

5. Process according to Claims 1 to 4, characterised in that the carbon/nitrogen ratio in the mixture is adjusted to 15 to 20:1 before the steaming.

6. Process according to Claims 1 to 5, characterised in that the pH value during the fermentation is maintained in a range from 6 to 7.5 by an addition of calcium carbonate or a mixture of calcium and magnesium carbonate before the steaming.

7. Process according to Claims 1 to 6, characterised in that the temperature adjustment is effected by adding water and/or blowing in air.

8. Process according to Claims 1 to 7, characterised in that the water-soluble nitrogen carrier used is urea which is added in a quantity of 5 to 8 kg per cubic metre of bark.

**Revendications**

1.- Procédé pour la production d'un support d'humus et engrais complet à base d'écorce d'arbre obtenue lors de la transformation de bois en grumes, par broyage, addition de supports d'azote, ainsi que traitement par de la vapeur surchauffée, avec réglage d'une température de réaction d'au moins 90° C dans l'écorce, caractérisé en ce qu'on ajoute à l'écorce un support d'azote soluble dans l'eau selon une quantité telle que l'on obtienne dans le mélange un rapport entre le carbone et l'azote de 25:1 au maximum, en ajoutant d'abord une partie de la quantité de support d'azote soluble dans l'eau devant être ajouté au total et en laissant reposer le mélange jusqu'à ce que l'écorce présente une constitution friable, après quoi on broie le produit et on y ajoute la quantité restante du support d'azote soluble dans l'eau et on soumet le produit de la réaction après le traitement par la vapeur, avec une teneur en eau de ce produit de 60 à 70 % en poids, qui est réglée si nécessaire, à une fermentation à une température de 50 à 70° C et à une valeur de pH du produit comprise dans la gamme allant de 6 à 7,5, jusqu'à ce que la fermentation cesse malgré la présence d'une teneur résiduelle en azote soluble dans l'eau, après quoi on ajoute au produit de la réaction, le cas échéant, d'autres substances nutritives, des agents d'amélioration du sol et/ou des oligo-éléments.

2.- Procédé suivant la revendication 1, caractérisé en ce qu'on ajoute en outre, avant le traitement par la vapeur, encore un constituant phosphaté soluble dans l'eau.

3.- Procédé suivant les revendications 1 et 2, caractérisé en ce qu'on ajoute, avant le traitement par la vapeur, des oligo-éléments.

4.- Procédé suivant la revendication 3, caractérisé en ce que le rapport fer-manganèse optimal est réglé par l'addition de sels de fer.

5.- Procédé suivant l'une quelconque des revendications 1 à 4, caractérisé en ce qu'on règle le rapport entre le carbone et l'azote dans le mélange à une valeur de 15 à 20:1 avant le traitement par la vapeur.

6.- Procédé suivant l'une quelconque des revendications 1 à 5, caractérisé en ce qu'on maintient la valeur de pH pendant la fermentation dans une gamme de 6 à 7,5 par addition de carbonate de calcium ou d'un mélange de carbonate de calcium et de magnésium avant le traitement par la vapeur.

7.- Procédé suivant l'une quelconque des revendications 1 à 6, caractérisé en ce qu'on effectue le réglage de la température par addition d'eau et/ou par insufflation d'air.

8.- Procédé suivant l'une quelconque des revendications 1 à 7, caractérisé en ce qu'on utilise comme support d'azote soluble dans l'eau de l'urée qui est ajoutée en une quantité de 5 à 8 kg par mètre cube d'écorce.